# EUROPÄISCHE PATENTSCHRIFT

(11) **EP 0 501 028 B1**
(45) Veröffentlichungstag und Bekanntmachung des Hinweises auf die Patenterteilung: **11.01.1995**
(21) Anmeldenummer: 91121305.6
(22) Anmeldetag: 12.12.1991
(51) Int. Cl.: C05F 17/02, B65F 1/14

(54) **Verfahren und Vorrichtung zur Behandlung organischer Abfälle**
Process and device for treating organic wastes
Procédé et dispositif pour le traitement de déchets organiques

(30) Priorität: 23.02.1991 DE 4105778
(43) Veröffentlichungstag der Anmeldung: 02.09.1992
(73) Patentinhaber: HTC Technologie Centrum GmbH, D-58239 Schwerte (DE)
(72) Erfinder: Fieback, Klaus, Dr. Ing., O-1156 Berlin (DE); Soyez, Konrad, Dr. Ing., O-1020 Berlin (DE)
(74) Vertreter: Patentanwälte Meinke, Dabringhaus und Partner

(56) Entgegenhaltungen:
- WO-A- /06890
- WO-A-90/05098
- DE-A- 1 952 222
- DE-C- 3 517 262

## Beschreibung

Die Erfindung richtet sich auf ein Verfahren und eine Vorrichtung zur Behandlung organischer Abfälle unter Einsatz wenigstens eines im Freien aufstellbaren Rottebehältnisses mit einem das zu verrottende Gut aufnehmenden Korb im Inneren des Behältnisses, wobei eine Umspülung des Aufnahmekorbes mit Umgebungsluft vorgenommen wird.

Die Entsorgung von Abfällen, insbesondere auch von organischen Abfällen, ist in vielfacher Weise bekannt. So beispielsweise aus der CH-647 488-A5. Dort wird in einem Rottebehältnis von unten über Einspritzdüsen Luft durch das Rottegut gedrückt, wobei das Rottegut von oben zugeführt wird. In einer zweiten Stufe wird das ausgetragene Rottegut dann in ähnlicher Weise behandelt mit Zwangszuführung von Feuchtigkeit wiederum in der von unten eingeführten Luft.

Eine Vorrichtung zum Kompostieren von Bio-Material zeigt die CH-669 187-A5 mit korbähnlichen Behältern unterteilt in eine Gärungs- und eine Faulkammer und eine unten liegende Rottekammer. Hier ist der freie Zugang der Umgebungsparameter, wie Feuchtigkeit und Luft, vorgesehen. Ein Müllgefäß für kompostierbare Abfälle zeigt die DE-A-35 17 262. Aus der Fülle weiterer bekannter Lösungen seien hier noch genannt: CH-672 122-A5, GB-2 146 979-B, GB-2 214 175-A, GB-2 224 021-A, US-4 752 316, US-6 927 528 sowie die DE-39 03 947-A1, DE-39 12 474-C2 und DE-40 00 510-A1, wobei gerade letztere großtechnische Anlagen betreffen.

Einen Rottebehälter, der meteorologische Bedingungen nutzt, insbesondere den Temperaturwechsel zwischen Sonneneinstrahlung und Nachtkälte, zeigt die WO-A-90/06890 mit der Möglichkeit, über entsprechende Öffnungen Feuchtigkeit der Umgebung aufzunehmen oder an diese abzugeben. Eine Führung von Luft zeigt ein Müllgefäß gemäß DE-C-35 17 262, eine Abfalltonne mit Beeinflussung der Spülluft, zeigt die WO-A-90/05098.

Die Erfindung will sich als Aufgabe Erkenntnisse aus großtechnischen Anlagen zunutze machen und gleichzeitig komfortabel handhabbare, in Gärten, Haushalten u. dgl. einsetzbare Rottebehältnisse so betreiben und so gestalten, daß eine optimale, praktisch fremdenergiefreie Behandlung der organischen Abfälle möglich ist, wobei insbesondere die durch die Sonne einfallende Energie nutzbringend eingesetzt werden soll.

Mit einem Verfahren der eingangs bezeichneten Art wird diese Aufgabe gemäß der Erfindung dadurch gelöst, daß zur Feuchtigkeitsaufnahme die Umgebungsluft vor Um- bzw. Durchströmen des Aufnahmekorbes über die Oberfläche eines am Rottebehältnis vorgesehenen Wasserreservoirs geleitet wird, wobei die Feuchtigkeitsaufnahme der Umgebungsluft mittels der jeweils aktuellen meteorologischen Gegebenheiten, insbesondere der Solarstrahlung, vorgenommen wird.

Mit dem erfindungsgemäßen Verfahren wird erreicht, daß im wesentlichen die Umgebungsbedingungen, insbesondere die Solarstrahlung, für eine Art zwangsweise Durchspülung des Rottegutes sorgen, wobei sich der Feuchtigkeitsgehalt der Spülluft jeweils optimal einstellt.

Vorteilhaft ist es, wenn, wie dies die Erfindung ebenfalls vorsieht, die Feuchtigkeitsanreicherung proportional zur Solarstrahlung vorgenommen wird.

Nach dem erfindungsgemäßen Verfahren ist in Ausgestaltung auch vorgesehen, daß die Luftströmung von einem wenigstens bereichsweise doppelwandigen Aufnahmebehälter für den Rottekorb aufgrund unterschiedlicher Dichten von Umgebungsluft und Luft im Rottebehältnis durch Einsatz einer wenigstens bereichsweise transparenten Außenwandung zur Umgebung hin und einer zwischen Außen- und Innenwand befindlichen Flüssigkeitstransportwand erzeugt wird.

Durch diese Ausgestaltung wird mit Hilfe der Sonneneinstrahlung unter Ausnutzung unterschiedlicher Gasdichten der Luft- und Feuchtigkeitstransport vorgenommen, wobei sich die Bedingungen, wie eingangs bereits angegeben, in der Regel optimal von selber einstellen.

Vorgesehen sein kann auch, daß bei einem doppelwandigen Aufnahmebehälter für den Rottekorb das Verfahren so gestaltet wird, daß die Regulierung des Feuchtigkeitsgehaltes und der Temperatur des Luftstromes im Rottebehältnis vor Eintritt/Durchtritt durch das Rottegut durch Einsatz einer wenigstens bereichsweise transparenten Außenwandung zur Umgebung hin und einer im Doppelwandbereich befindlichen Flüssigkeitstransportwand erzeugt wird.

Reichen die natürlichen Bedingungen nicht aus, was dann möglich sein kann, wenn beispielsweise vergleichsweise großvolumige Rottebehälter eingesetzt werden, so kann zusätzlich nach der Erfindung so vorgegangen werden, daß zur Erzeugung einer Luftströmung ein Gebläse eingesetzt wird, wobei Gebläse für sich gesehen, wie der eingangs bezeichnete Stand der Technik zeigt, bekannt sind.

Zur Lösung der eingangs formulierten Aufgabe sieht die Erfindung auch eine Vorrichtung vor, die Gegenstand des unabhängigen Anspruches 6 ist; bevorzugte Ausgestaltungen sind Gegenstand der abhängigen Ansprüche 7-11.

Damit werden außenwandseitige Strömungskanäle für Umgebungsluft erreicht, die unterschiedlichen Bedingungen an Druck und Temperatur, Feuchtigkeitsgehalt u. dgl. gerecht werden können.

Um hier ein besonders günstiges Verhalten zu erreichen, sieht die Erfindung auch vor, daß wenigstens Teilbereiche der Außenwand aus einem transparenten Material, während die gegenüberliegenden, korrespondierenden Bereiche der Innenwand aus einem lichtundurchlässigen Material gebildet sind, wobei insbesondere vorgesehen sein kann, daß der Aufnahmebehälter für den Rottekorb im unteren Bereich mit einem Flüssigkeitsreservoir ausgerüstet ist.

Zweckmäßig kann es auch sein, wenn der obere Deckel des Behälters mit einem Sauggebläse ausgerüstet ist, wobei es hier besonders vorteilhaft ist, wenn die Kapselung des Sauggebläses mit die Antriebsenergie bereitstellenden Solarzellen ausgerüstet ist.

Um neben der im Rottegut selbst vorhandenen Flüssigkeit für zusätzliche Zufuhr von Flüssigkeit zu sorgen, sieht die Erfindung auch vor, daß der Deckel mit Öffnungen zum Eintritt von Regenwasser und unteren Austrittsöffnungen in das Flüssigkeitsreservoir ausgerüstet ist, wobei auch vorgesehen sein kann, daß wenigstens Teilbereiche der zu den Luftströmungskanälen weisenden inneren Wandflächen mit einem Feuchtigkeit aufnehmenden Vlies ausgerüstet sind, das beispielsweise bis in den Sumpf des Behälters reicht und so dort gesammelte Feuchtigkeit nach oben transportieren kann, die dann von der nach unten strömenden, von außen eintretenden Umgebungsluft aufgenommen werden kann.

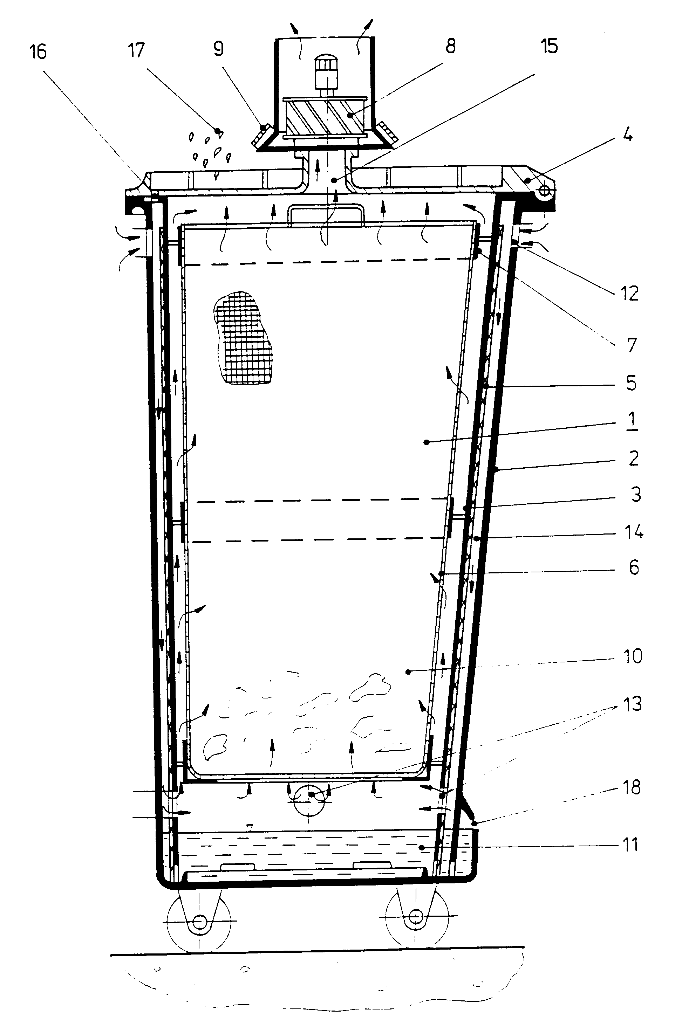

Die Erfindung ist nachstehend anhand der Zeichnung beispielsweise näher erläutert. Diese zeigt in der einzigen Figur in vereinfachter Darstellung eine Vorrichtung nach der Erfindung im Schnitt.

In der Figur ist ein allgemein mit 1 bezeichnetes Rottebehältnis dargestellt, etwa in Größe einer 100 bis 200 Liter Mülltonne, ohne daß die Erfindung auf diese Art der Größengestaltung beschränkt wäre. Das Rottebehältnis bzw. der Aufnahmebehälter 1 weist eine lichtdurchlässige Außenwand 2 und eine lichtundurchlässige Innenwand 3 in Abstand zueinander auf, derart, daß sich Strömungskanäle 14 ausbilden, die Luftströmung ist in der Figur mit kleinen Pfeilen dargestellt. Oben abgeschlossen ist der Aufnahmebehälter 1 von einem Verschlußdeckel 4. Im Inneren ist ein Drahtkorb 6 mittels Distanzhaltern 7 an der Innenwand 3 angeordnet, wobei in dem Drahtkorb 6 die andeutungsweise wiedergegebenen Rotteabfälle enthalten sind.

Um einen optimalen Flüssigkeitstransport und eine optimale Luftbefeuchtung durch die Strömungskanäle 14 zu erreichen, weist die Innenwand 3 auf ihrer der wenigstens bereichsweise transparenten Außenwand 2 gegenüberliegenden Oberfläche ein Flüssigkeit transportierendes bzw. speicherndes Material, vorzugsweise ein schwarzes Vliesgewebe 5, auf, z.B. aus Kunststoff. Dieses Vlies 5 ragt in einen unteren, als Flüssigkeitsreservoir 11 ausgebildeten Bereich des Aufnahmebehälters 1, der sich mit Flüssigkeit aus den Abfällen 10 (z.B. mit überflüssiger Zellflüssigkeit) oder mit Regenwasser füllt, wobei einige Regentropfen in der Figur oben links angedeutet und mit 17 bezeichnet sind. Zum Abfluß des Regenwassers können Abflußöffnungen 16 im Deckel eingebracht sein, die so gestaltet sind, daß trotz dieser Öffnungen eine den Pfeilen in der Figur entsprechende Luftzirkulation sichergestellt ist.

Um einen unteren vorbestimmten Flüssigkeitspegel aufrechtzuerhalten, kann außenwandseitig über einen Geruchsverschluß eine Überlauföffnung 18 vorgesehen sein.

Falls ein Naturumlauf dieser Luft nicht gewährleistet werden kann oder nicht immer sich von selbst ausbildet, kann ein über Solarzellen 9 betreibbarer Lüfter 8 am Deckel 4 mit einem Ansaugstutzen 15 vorgesehen sein.

Wird der Lüfter 8 angetrieben, saugt er von außen durch die mit 12 bezeichneten Ansaugöffnungen die Luft in die Kanäle 14, die dann über untere Durchtrittsbohrungen 13 in den Bereich des Aufnahmekorbes 6 eintritt unter Aufnahme von Flüssigkeit, sei es unmittelbar aus dem Gewebe bzw. Vlies 5 oder aus dem Dampfraum über den Flüssigkeitssumpf 11.

Da trotz optimaler Betriebsbedingungen nicht immer gewährleistet sein kann, daß die Verrottung geruchsfrei erfolgt, kann (was allerdings nicht näher dargestellt ist) der obere Ansaugstutzen oder der Bereich oberhalb des Lüfters 8 mit einem zusätzlichen Filter ausgerüstet sein.

Natürlich ist das beschriebene Ausführungsbeispiel der Erfindung noch in vielfacher Hinsicht abzuändern, ohne den Grundgedanken zu verlassen. So kann beispielsweise der Aufnahmekorb 6 aus mehreren über bzw. nebeneinander stapelbaren Elementen gefertigt sein, etwa zur Aufnahme unterschiedlicher Abfälle, z.B. um schnell verrottende Abfälle von langsam verrottenden Abfällen abzutrennen oder um die Handhabung durch schwächere Personen zu erleichtern, wozu auch die in der Figur dargestellten Laufrollen unterhalb des Aufnahmebehälters 1 dienen sollen.

## Patentansprüche

1. Verfahren zur Behandlung organischer Abfälle unter Einsatz wenigstens eines im Freien aufstellbaren Rottebehältnisses mit einem das zu verrottende Gut aufnehmenden Korb im Inneren des Behältnisses, wobei eine Umspülung des Aufnahmekorbes mit Umgebungsluft vorgenommen wird,
dadurch gekennzeichnet,
daß zur Feuchtigkeitsaufnahme die Umgebungsluft vor Um- bzw. Durchströmen des Aufnahmekorbes über die Oberfläche eines am Rottebehältnis vorgesehenen Wasserreservoirs geleitet wird, wobei die Feuchtigkeitsaufnahme der Umgebungsluft mittels der jeweils aktuellen meteorologischen Gegebenheiten, insbesondere der Solarstrahlung, vorgenommen wird.

2. Verfahren nach Anspruch 1,
dadurch gekennzeichnet,
daß die Feuchtigkeitsanreicherung proportional zur Solarstrahlung vorgenommen wird.

3. Verfahren nach Anspruch 1 oder 2,
dadurch gekennzeichnet,
daß die Luftströmung von einem wenigstens bereichsweise doppelwandigen Aufnahmebehälter für den Rottekorb aufgrund unterschiedlicher Dichten von Umgebungsluft und Luft im Rottebehältnis durch Einsatz einer wenigstens bereichsweise transparenten Außenwandung zur Umgebung hin und einer zwischen Außen- und Innenwand befindlichen Flüssigkeitstransportwand erzeugt wird.

4. Verfahren nach einem der vorangehenden Ansprüche mit einem wenigstens bereichsweise doppelwandigen Aufnahmebehälter für den Rottekorb,
dadurch gekennzeichnet,
daß die Regulierung des Feuchtigkeitsgehaltes und der Temperatur des Luftstromes im Rottebehältnis vor Eintritt/Durchtritt durch das Rottegut durch Einsatz einer wenigstens bereichsweise transparenten Außenwandung zur Umgebung hin und einer im Doppelwandbereich befindlichen Flüssigkeitstransportwand erfolgt.

5. Verfahren nach einem der vorangehenden Ansprüche,
dadurch gekennzeichnet,
daß zur Erzeugung einer Luftströmung ein Gebläse od. dgl. eingesetzt wird.

6. Vorrichtung zur Behandlung organischer Abfälle als im Freien aufstellbare Aufnahmebehälter mit einem das zu verrottende Gut aufnehmenden Korb im Inneren des Behälters,
wobei
der Aufnahmebehälter (1) wenigstens bereichsweise doppelwandig derart ausgebildet ist, Strömungskanäle (14) für Umgebungsluft entstehen mit im oberen Bereich angeordneten Ansaugöffnungen (12) für Umgebungsluft und im unteren Bereich des Behälters (1) nach innen weisenden Abgabeöffnungen (13) in die Umgebung für die Umgebungsluft und einer oberen inneren Ausströmöffnung (15) für die Luft nach Um- bzw. Durchströmen des Rottekorbes (6) und wobei der Aufnahmebehälter (1) für den Rottekorb (6) im unteren Bereich mit einem Flüssigkeitsreservoir (11) ausgerüstet ist.

7. Vorrichtung nach Anspruch 6,
dadurch gekennzeichnet,
daß wenigstens Teilbereiche der Außenwand (2) aus einem transparenten Material, während die gegenüberliegenden, korrespondierenden Bereiche der Innenwand (3) aus einem lichtundurchlässigen Material gebildet sind.

8. Vorrichtung nach Anspruch 6 oder 7,
dadurch gekennzeichnet,
daß der obere Deckel (4) des Behälters (1) mit einem Sauggebläse (8) ausgerüstet ist.

9. Vorrichtung nach Anspruch 6 bis 8,
dadurch gekennzeichnet,
daß die Kapselung des Sauggebläses (8) mit die Antriebsenergie bereitstellenden Solarzellen (9) ausgerüstet ist.

10. Vorrichtung nach Anspruch 6 bis 9,
dadurch gekennzeichnet,
daß der Deckel (4) mit Öffnungen (16) zum Eintritt von Regenwasser und unteren Austrittsöffnungen in das Flüssigkeitsreservoir ausgerüstet ist.

11. Vorrichtung nach Anspruch 6 bis 10,
dadurch gekennzeichnet,
daß wenigstens Teilbereiche der zu den Luftströmungskanälen (14) weisenden inneren Wandflächen (3) mit einem Feuchtigkeit aufnehmenden Vlies (5) ausgerüstet sind.

## Claims

1. A method of treating organic wastes using at least one decomposition container which can be set up in the open having a basket in the interior of the container, which basket receives the material to be decomposed, wherein ambient air is caused to flow around the receiving basket, characterised in that for the absorption of moisture the ambient air is passed over the surface of a water reservoir provided at the decomposition container, before the ambient air flows around or through the receiving basket, wherein the absorption of moisture by the ambient air is effected by means of the respectively current meteorological factors, in particular solar radiation.

2. A method according to claim 1 characterised in that the increase in moisture content is effected proportionally to the solar radiation.

3. A method according to claim 1 or claim 2 characterised in that the air flow is produced by a receiving container for the decomposition basket, the receiving container being of a double-wall configuration at least in a region-wise manner, by virtue of different densities of ambient air and air in the decomposition container, by the use of an outside wall which is transparent at least in a region-wise manner, towards the ambient area, and a liquid transportation wall which is disposed between the outside and inside walls.

4. A method according to one of the preceding claims with a receiving container for the decomposition basket, which receiving container is of a double-wall configuration at least in a region-wise manner, characterised in that regulation of the moisture content and the temperature of the air flow in the decomposition container prior to passing into/through the material to be decomposed is effected by the use of an outside wall, which is transparent at least in a region-wise manner, towards the ambient area, and a liquid transportation wall which is disposed in the double wall region.

5. A method according to one of the preceding claims characterised in that a fan or the like is used to produce an air flow.

6. Apparatus for treating organic wastes in the form of a receiving container which can be set up in the open, with a basket, for receiving the material to be decomposed, in the interior of the container, wherein the receiving container (1) is of a double-wall configuration at least in a region-wise manner in such a way that flow passages (14) for ambient air are provided, with suction intake openings (12) disposed in the upper region for ambient air and inwardly facing discharge openings (13) in the lower region of the container (1) into the ambient area for the ambient air and an upper inner discharge flow opening (15) for the air after flowing around or through the decomposition basket (6) and wherein the receiving container (1) for the decomposition basket (6) is provided in the lower region with a liquid reservoir (11).

7. Apparatus according to claim 6 characterised in that at least portions of the outer wall (2) are formed from a transparent material while the oppositely disposed, corresponding regions of the inner wall (3) are formed from an opaque material.

8. Apparatus according to claim 6 or claim 7 characterised in that the upper lid (4) of the container (1) is provided with a suction fan (8).

9. Apparatus according to claims 6 to 8 characterised in that the casing of the suction fan (8) is provided with solar cells (9) for producing the drive energy.

10. Apparatus according to claims 6 to 9 characterised in that the lid (4) is provided with openings (16) for the entry of rainwater and lower outlet openings into the liquid reservoir.

11. Apparatus according to claims 6 to 10 characterised in that at least portions of the inner wall surfaces (3), which face the air flow passages (14), are fitted with a moisture-absorbing fleece (5).

## Revendications

1. Procédé pour le traitement de déchets organiques utilisant au moins un récipient de pourrissement pouvant être disposé à l'air libre et comprenant à l'intérieur du récipient un panier qui reçoit les produits à faire pourrir, panier dans lequel est prévu un balayage par l'air de l'environnement,
caractérisé en ce qu'on dirige, pour prélever de l'humidité, l'air de l'environnement sur la surface d'un réservoir d'eau prévu dans le récipient de pourrissement avant de le faire passer autour ou à travers le panier de réception, le prélèvement de l'humidité par l'air environnant étant réalisé par les conditions météorologiques du moment et en particulier par le rayonnement solaire.

2. Procédé selon la revendication 1,
caractérisé en ce que l'enrichissement en humidité est proportionnel à l'ensoleillement.

3. Procédé selon la revendication 1 ou 2,
caractérisé en ce que l'écoulement de l'air est obtenu par un récipient de réception au moins à double paroi dans certaines régions et destiné au panier de pourrissement, en raison des densités différentes de l'air de l'environnement et de l'air dans le récipient de pourrissement, en utilisant une paroi extérieure au moins transparente dans certaines zones vis-à-vis de l'environnement, et une paroi transporteuse de liquide prévue entre la paroi extérieure et la paroi intérieure.

4. Procédé selon l'une quelconque des revendications précédentes, comprenant un récipient de réception au moins à double paroi dans certaines zones pour le panier de pourrissement,
caractérisé en ce que la régulation de la teneur en humidité et de la température du courant d'air dans le récipient de pourrissement a lieu avant l'entrée/passage dans le produit de pourrissement par utilisation d'une paroi extérieure transparente dans certaines zones au moins vis-à-vis de l'environnement et d'une paroi transporteuse de liquide dans la zone de la double paroi.

5. Procédé selon l'une quelconque des revendications précédentes,
caractérisé en ce qu'on utilise une soufflante ou analogue pour produire l'écoulement de l'air.

6. Dispositif pour le traitement de déchets organiques sous forme d'un récipient de réception pouvant être disposé à l'air libre et comprenant à l'intérieur du récipient un panier qui reçoit le produit à faire pourrir, le récipient de réception (1) étant constitué par une double paroi au moins par endroits, des canalisations d'écoulement (14) pour l'air de l'environnement étant prévues avec des ouvertures d'aspiration (12) disposées dans la partie supérieure pour l'air de l'environnement et des ouvertures d'évacuation (13) tournées vers l'intérieur dans la partie inférieure du récipient (1) pour l'air de l'environnement et une ouverture de sortie interne supérieure (15) pour l'air après qu'il a passé autour ou dans le panier de pourrissement (6), et dans lequel le récipient de réception (1) du panier de pourrissement (6) est équipé dans sa partie inférieure d'un réservoir à liquide (11).

7. Dispositif selon la revendication 6, caractérisé en ce qu'au moins des zones partielles de la paroi extérieure (2) sont constituées en un matériau transparent, alors que les zones correspondantes et opposées de la paroi intérieure (3) sont constituées en un matériau ne laissant pas passer la lumière.

8. Dispositif selon la revendication 6 ou 7,
caractérisé en ce que le couvercle supérieur (4) du récipient (1) est équipé d'une soufflante d'aspiration (8).

9. Dispositif selon les revendications 6 à 8,
caractérisé en ce que le capotage de la soufflante d'aspiration (8) est équipé de cellules solaires (9) fournissant l'énergie d'entraînement.

10. Dispositif selon les revendications 6 à 9,
caractérisé en ce que le couvercle (7) est équipé d'ouvertures (16) pour l'entrée de l'eau de pluie et d'ouvertures de sortie inférieures dans le réservoir à liquide.

11. Dispositif selon les revendications 6 à 10,
caractérisé en ce que les surfaces (3) de la paroi intérieure qui sont tournées vers les canalisations de passage d'air (14) sont équipées d'un feutre (5) qui capte l'humidité.
